# EUROPÄISCHE PATENTANMELDUNG

(11) **EP 2 172 514 A1**
(43) Veröffentlichungstag der Anmeldung: **07.04.2010**
(21) Anmeldenummer: 09012059.3
(22) Anmeldetag: 23.09.2009
(51) Int. Cl.: C08L 3/02, B44C 3/04

(54) **Modelliermasse**

(30) Priorität: 06.10.2008 DE 202008013094 U; 30.10.2008 DE 202008014446 U
(71) Anmelder: Trends2Com bvba, 3930 Hamont (BE)
(72) Erfinder: Spreuwers, Hartwig, 3930 Hamont-Achel (DE)
(74) Vertreter: Richter, Werdermann, Gerbaulet & Hofmann

(57) **Zusammenfassung**

Eine Modelliermasse, bei der sich weder während der Trocknung noch bei der Trocknung von aus dieser hergestellten Gegenständen einen Zerfall der Modelliermasse begünstigende Risse bilden, weist eine Zusammensetzung auf, die die Komponenten Stärke, Klebemasse, Kochsalz, Wasser, Calciumchlorid, Natriumbenzoat, Kaliumdihydrogensulfat, flüssiges Paraffin, Propylenglykol und Bitterstoff umfassen.

## Beschreibung

Die Erfindung betrifft eine Zusammensetzung, eine diese Zusammensetzung enthaltende Modelliermasse, ein Verfahren zu deren Herstellung sowie die Verwendung dieser Zusammensetzung als Modelliermasse.

Als Modelliermasse wird eine leicht verformbare, ton- oder wachsähnliche Masse bezeichnet, die zum einfachen Modellieren und Spielen verwendet wird. Derartige Modelliermassen werden auch als Knetmasse bezeichnet.

Die zum Spielen verwendete Modelliermasse sollte für die Haut unschädlich sein, ist aber nicht zum Verzehr geeignet.

Aus dem Stand der Technik sind verschiedenartigste Modelliermassen auch mit Eignung zum Spielen bekannt.

Bei Spielmaterialzusammensetzungen, die knetfähig, plastisch formbar oder modellierbar sind, so daß man Personen oder Gegenstände nachbilden kann, handelt es sich typischerweise um Produkte mineralischen Ursprungs, wie zum Beispiel Tonprodukte, oder um Produkte pflanzlichen Ursprungs, wie beispielsweise Stärkeprodukte.

Alle bisher bekannte Modelliermassen weisen jedoch Nachteile auf. Viele Modelliermassen sind im Hinblick auf ihren Verwendungszweck nur teuer herzustellen. Andere Modelliermassen verfügen über Eigenschaften, die eine Formbarkeit nur bei bestimmten Temperaturen oder bei Zusatz weiterer Komponenten zulassen. Ein besonders schwerwiegender Nachteil ist die Bildung von Rissen, die sich im Laufe der Zeit in Gegenständen bilden, die aus oder mit den bekannten Modelliermassen hergestellt worden sind. Insbesondere in der Oberfläche von Gegenständen, die aus solchen Modelliermassen hergestellt werden sind, zeigen sich vergleichsweise schnell Risse, die schließlich den Gebrauchswert, aber auch die Stabilität des gesamten Gegenstandes beeinträchtigen.

Bei bekannten Modelliermassen ist insbesondere während der Trocknung die Bildung von Rissen zu beobachten. Die Bildung solcher Risse während der Trocknung kann dazu führen, dass die Modelliermasse zerfällt.

Aufgabe der Erfindung ist es, die Nachteile nach dem Stand der Technik zu beseitigen. Insbesondere soll eine Modelliermasse angegeben werden, die über verbesserte Eigenschaften verfügt, so dass sich weder während der Trocknung der Modelliermasse noch bei den Gegenständen, die aus oder mit dieser Modelliermasse hergestellt worden sind, Risse bilden.

Diese Aufgabe wird durch die Merkmale der Ansprüche 1, 5, 8 und 9 bis 12 gelöst, Zweckmäßige Ausgestaltungen der Erfindung ergeben sich aus den Merkmalen der Ansprüche 2 bis 4 sowie 6 und 7.

Nach Maßgabe der Erfindung ist eine Zusammensetzung vorgesehen, die Stärke, Klebemasse, Kochsalz, Wasser, Calciumchlorid, Natriumbenzoat, Kaliumdihydrogensulfat, flüssiges Paraffin, Propylenglykol und Bitterstoff umfasst.

Die Klebemasse ist vorzugsweise gemahlener Klebreis. Das flüssige Paraffin umfasst Paraffinwachs und/oder Paraffinkohlenwasserstoffen, insbesondere *Paraffinium liquidum, Paraffinium perliquidum, Paraffinium* so*dium,* Weichparaffin und Petrolatum, Parrafinöl und Weißöl.

Nach Maßgabe der Erfindung ist ferner einer Modelliermasse vorgesehen, die die Zusammensetzung der Erfindung und optional weitere Bestandteile umfasst. Die erfindungsgemäße Modelliermasse kann lufttrocknend oder ofentrocknend sein.

Die erfindungsgemäßen Modelliermassen können vorteilhaft als Kinderspielzeug, als Steckmaterial in der Blumenpflege, als Reinigungsmittel für Schreibmaschinentypen, als Abgußmaterial und dergleichen verwendet werden.

In einer erfindungsgemäßen Ausführungsform besteht die Modelliermasse ausschließlich aus der Zusammensetzung und enthält somit keine weiteren Bestandteile. In einer anderen Ausführungsform umfasst die Modelliermasse, bezogen auf deren Gewicht,
(a) 90 bis 100 Gew.-% der erfindungsgemäßen Zusammensetzung und
(b) 10 bis 0 Gew.-% Additive und/oder Zuschlagstoffe.

Die erfindungsgemäße Modelliermasse bietet den besonderen Vorteil, dass die Bildung von Rissen während oder nach der Trocknung vermieden wird. Insbesondere wird vermieden, dass sich während der Trocknung der Modelliermasse Risse bilden. Die Modelliermasse kann bei Raumtemperatur luftgetrocknet werden. Dabei zeigen sich keine Risse, obwohl die hergestellten Gegenstände vollständig austrocknen. Die aus der erfindungsgemäßen Modelliermasse erhaltenen Gegenstände sind nach der Trocknung unkaputtbar. Sie können somit ebenso wie die Modelliermasse selbst als Spielzeug verwendet werden.

Ferner wird vermieden, dass sich in der Oberfläche von Gegenständen, die aus den erfindungsgemäßen Modelliermassen hergestellt werden, während des Gebrauchs nach der Trocknung Risse bilden. Überdies lassen sich die erfindungsgemäßen Modelliermassen kostengünstig und ohne Zusätze herstellen. Sie sind über einen weiten Temperaturbereich einsetzbar.

Eine bevorzugte Modelliermasse besteht aus der folgenden erfindungsgemäßen Zusammensetzung:
- 25,0 bis 35,0 %: Stärke,
- 20,0 bis 30,0 %: Klebemasse,
- 0,1 bis 5,0 %: Kochsalz,
- 20,0 bis 30,0 %: Wasser,
- 5,0 bis 10,0 %: Calciumchlorid,
- 0,1 bis 2,5 %: Natriumbenzoat,
- 0,01 bis 1,0 %: Kaliumdihydrogensulfat,
- 0,1 bis 5,0 %: Flüssiges Paraffin,
- 01, bis 5,0 %: Propylenglykol,
- 0,00001 bis 0,001 %: Bitterstoff,
mit der Maßgabe, dass die Summe aller Komponenten 100,00 Gew.-% ergibt. Die Modelliermasse enthält keine weiteren Bestandteile.

Die in der vorliegenden Erfindung verwendeten Prozentangaben sind Angaben in Gewichtsprozent und beziehen sich, wenn nicht anders angegeben, jeweils auf das Gewicht der Zusammensetzung.

Eine besonders bevorzugte Modelliermasse besteht aus der folgenden erfindungsgemäßen Zusammensetzung:
- 34,314 %: Stärke,
- 24,510 %: Klebemasse,
- 1,961 %: Kochsalz,
- 26,6468 %: Wasser,
- 7,843 %: Calciumchlorid,
- 1,3725 %: Natriumbenzoat,
- 0,255 %: Kaliumdihydrogensulfat,
- 1,961 %: Flüssiges Paraffin,
- 0,980 %: Propylenglykol,
- 0,0001 %: Bitterstoff,
und enthält keine weiteren Bestandteile.

Zur Herstellung eines Gegenstandes wird die erfindungsgemäße Modelliermasse nach der Modellierung des Gegenstandes vorzugsweise luftgetrocknet.

Nach Maßgabe der Erfindung ist ferner ein Verfahren zur Herstellung einer Modelliermasse nach einem der Ansprüche 5 bis 7, umfassend
(a) Bereitstellen der Komponenten der Zusammensetzung nach einem der Ansprüche 1 bis 4;
(b) Bereitstellen der gegebenenfalls vorgesehenen Additive und/oder Zuschlagstoffe; und
(c) Vermischen der in Schritt (a) bereitgestellten Komponenten und der gegebenenfalls in Schritt (b) bereitgestellten Additive und/oder Zuschlagstoffe unter Erhalt eines homogenen Gemisches.

Eine erfindungsgemäße Verwendung der Modelliermasse zur Herstellung eines Gegenstandes umfasst
(a) Bereitstellen der Modelliermasse;
(b) Formen der Modelliermasse unter Erhalt der Gestalt des Gegenstandes; und
(c) Trocknen der geformten Modelliermasse an der Luft unter Erhalt des Gegenstandes.

Die Erfindung wird nachstehend anhand eines Beispiels, das die Erfindung in keiner Weise beschränken soll, näher beschrieben.

### Beispiel

Eine erfindungsgemäße Modelliermasse, bestehend aus der folgenden Zusammensetzung, wurde durch Mischen der Komponenten
- 34,314 %: Stärke,
- 24,510 %: gemahlener Klebreis,
- 1,961 %: Kochsalz,
- 26,6468 %: Wasser,
- 7,843 %: Calciumchlorid,
- 1,3725 %: Natriumbenzoat,
- 0,255 %: Kaliumdihydrogensulfat,
- 1,961 %: Flüssiges Paraffin,
- 0,980 %: Propylenglykol,
- 0,0001 %: Bitterstoff
hergestellt. Das Mischen wurde durchgeführt, bis ein homogenes Gemisch erhalten wurde.

Nach der Formgebung wurde die Modelliermasse an der Luft getrocknet. Gegenstände, die aus der Modelliermasse gefertigt wurden, zeigten gute Gebrauchseigenschaften. Eine Rissbildung war nicht zu beobachten. Die Gegenstände konnten im üblichen kindlichen Spiel nicht zerstört werden und waren somit unkaputtbar.

Somit besteht die Erfindung in einer Modelliermasse, bei der sich weder während der Trocknung noch bei der Trocknung von aus dieser hergestellten Gegenständen einen Zerfall der Modelliermasse begünstigende Risse bilden, wobei die Modelliermasse eine Zusammensetzung aufweist, die die Komponenten Stärke, Klebemasse, Kochsalz, Wasser, Calciumchlorid, Natriumbenzoat, Kaliumdihydrogensulfat, flüssiges Paraffin, Propylenglykol und Bitterstoffe umfassen, bevorzugterweise in den vorangehend angegebenen Gew.-%-Anteilen.

## Patentansprüche

1. Zusammensetzung für eine Modelliermasse, umfassend die Komponenten
- Stärke,
- Klebemasse,
- Kochsalz,
- Wasser,
- Calciumchlorid,
- Natriumbenzoat,
- Kaliumdihydrogensulfat,
- flüssiges Paraffin,
- Propylenglykol,
- Bitterstoff.

2. Zusammensetzung nach Anspruch 1,
**dadurch gekennzeichnet, dass**
sie, jeweils bezogen auf das Gewicht der Zusammensetzung, aus
25,0 bis 35,0 % Stärke,
20,0 bis 30,0 % Klebemasse,
0,1 bis 5,0 % Kochsalz,
20,0 bis 30,0 % Wasser,
5,0 bis 10,0 % Calciumchlorid,
0,1 bis 2,5 % Natriumbenzoat,
0,01 bis 1,0 % Kaliumdihydrogensulfat,
0,1 bis 5,0 % Flüssiges Paraffin,
01, bis 5,0 % Propylenglykol,
0,00001 bis 0,001 % Bitterstoff,
besteht, mit der Maßgabe, dass die Summe aller Komponenten 100,00 Gew.-% ergibt.

3. Zusammensetzung nach Anspruch 1 oder Anspruch 2,
**dadurch gekennzeichnet, dass**
sie, jeweils bezogen auf das Gewicht der Zusammensetzung, aus
34,314 % Stärke,
24,510 % Klebemasse,
1,961 % Kochsalz,
26,6468 % Wasser,
7,843 % Calciumchlorid,
1,3725 % Natriumbenzoat,
0,255 % Kaliumdihydrogensulfat,
1,961 % flüssiges Paraffin,
0,980 % Propylenglykol,
0,0001 % Bitterstoff
besteht.

4. Zusammensetzung nach einem der vorstehenden Ansprüche, **dadurch gekennzeichnet, dass** die Klebemasse gemahlener Klebreis ist.

5. Modelliermasse, umfassend die Zusammensetzung nach einem der Ansprüche 1 bis 4.

6. Modelliermasse nach Anspruch 5, umfassend
(a) 90 bis 100 Gew.-% der Zusammensetzung nach Anspruch 1 und
(b) 10 bis 0 Gew.-% Additive und/oder Zuschlagstoffe.

7. Modelliermasse nach Anspruch 5, **dadurch gekennzeichnet, dass** die Additive und/oder Zuschlagstoffe farbgebende Substanzen umfassen.

8. Verfahren zur Herstellung einer Modelliermasse nach einem der Ansprüche 5 bis 7, umfassend
(a) Bereitstellen der Komponenten der Zusammensetzung nach einem der Ansprüche 1 bis 4;
(b) Bereitstellen der gegebenenfalls vorgesehenen Additive und/oder Zuschlagstoffe; und
(c) Vermischen der in Schritt (a) bereitgestellten Komponenten und der gegebenenfalls in Schritt (b) bereitgestellten Additive und/oder Zuschlagstoffe unter Erhalt eines homogenen Gemisches.

9. Verwendung der Zusammensetzung nach einem der Ansprüche 1 bis 4 als Modelliermasse.

10. Verwendung der Modelliermasse nach einem der Ansprüche 5 bis 7 zur Herstellung eines Gegenstandes, umfassend
(a) Bereitstellen der Modelliermasse;
(b) Formen der Modelliermasse unter Erhalt der Gestalt des Gegenstandes; und
(c) Trocknen der geformten Modelliermasse an der Luft unter Erhalt des Gegenstandes.

11. Verwendung der Modelliermasse nach einem der Ansprüche 5 bis 7 als Kinderspielzeug.

12. Verwendung der Modelliermasse nach einem der Ansprüche 5 bis 7 als Steckmaterial in der Blumenpflege.

13. Verwendung der Modelliermasse nach einem der Ansprüche 5 bis 7 als Abgussmaterial.
